# EUROPÄISCHE PATENTSCHRIFT

(11) **EP 3 086 918 B1**
(45) Veröffentlichungstag und Bekanntmachung des Hinweises auf die Patenterteilung: **18.11.2020**
(21) Anmeldenummer: 14825335.4
(22) Anmeldetag: 22.12.2014
(51) Int. Cl.: B29C 65/48, B29C 65/02

(54) **FASERVERSTÄRKTES DUROPLASTBAUTEIL MIT FUNKTIONSSCHICHT ZUM VERBINDEN MIT EINEM THERMOPLASTBAUTEIL**
FIBRE-REINFORCED THERMOSET PLASTIC COMPONENT WITH A FUNCTIONAL LAYER FOR CONNECTING TO A THERMOPLASTIC COMPONENT
ÉLÉMENT EN PLASTIQUE THERMODURCISSABLE RENFORCÉ PAR FIBRES PRÉSENTANT UNE COUCHE FONCTIONNELLE POUR LA LIAISON À UN ÉLÉMENT EN THERMOPLASTIQUE

(30) Priorität: 23.12.2013 DE 102013114829
(43) Veröffentlichungstag der Anmeldung: 02.11.2016
(73) Patentinhaber: KTM Technologies GmbH, 5081 Salzburg/Anif (AT)
(72) Erfinder: HUBER, Florian, 83224 Grassau (DE); MITTERER, Martin, 83435 Bad Reichenhall (DE); LOCHNER, Hans, 83486 Ramsau (DE); MARTIN, Peter, 83416 Saaldorf-Surheim (DE)
(74) Vertreter: Bergmeier, Werner
(86) Internationale Anmeldenummer: PCT/EP2014/078981
(87) Internationale Veröffentlichungsnummer: WO 2015/097147

(56) Entgegenhaltungen:
- EP-A1- 2 594 375
- EP-A2- 1 767 335
- WO-A1-2007/109855
- WO-A1-2012/161569
- US-A1- 2011 240 200

## Beschreibung

Die vorliegende Erfindung betrifft ein Herstellungsverfahren für ein faserverstärktes Duroplastbauteil, das mit einem Thermoplastbauteil stoffschlüssig verbindbar, insbesondere verschweißbar, ist, bei welchem zur Ausbildung eines Grundkörpers Verstärkungsfasern mit einer viskosen duroplastischen Matrix in eine Aushärtevorrichtung eingebracht werden und die duroplastische Matrix unter Druck und/oder Hitze angehärtet und/oder ausgehärtet wird, wobei vor oder während dieses Härteprozesses zum Beschichten des Grundkörpers, zumindest in einem zum Verbinden mit dem Thermoplastbauteil vorgesehen Fügebereich, eine Funktionsschicht an der viskosen duroplastischen Matrix und/oder den Verstärkungsfasern angeordnet wird, die sich während des Härteprozesses fest mit der duroplastischen Matrix und/oder den Verstärkungsfasern verbindet.

Des Weiteren betrifft die Erfindung ein derart hergestelltes Duroplastbauteil, das mit einem Thermoplastbauteil stoffschlüssig verbindbar, insbesondere verschweißbar, ist, wobei das Duroplastbauteil einen Grundkörper aufweist, der in einer ausgehärteten duroplastischen Matrix eingebundene Verstärkungsfasern umfasst und zumindest in einem zum Verbinden mit dem Thermoplastbauteil vorgesehen Fügebereich mit einer Funktionsschicht beschichtet ist.

Die Erfindung betrifft ferner ein Verbundbauteil mit einem derart hergestellten und ausgebildeten Duroplastbauteil.

Faserverbundbauteile gewinnen aufgrund ihrer Festigkeit und geringen Gewichts insbesondere in der Luftfahrt-, Raumfahrt- und Automobiltechnik mehr und mehr an Bedeutung. Hierbei finden insbesondere glasfaserverstärkter Kunststoff (GFK) und in zunehmenden Maße carbonfaserverstärkter Kunststoff (CFK) Verwendung.

Faserverstärkte Bauteile weisen Verstärkungsfasern, insbesondere Carbonfasern, Glasfasern und/oder Aramidfasern, auf, die in einer, insbesondere themoplastischen und/oder duroplastischen, Matrix eingebettet bzw. eingebunden sind. Hierbei verleihen insbesondere die Verstärkungsfasern dem Bauteil die nötige Festigkeit bzw. Steifigkeit. Die Matrix hat hingegen die primäre Wirkung, die Verstärkungsfasern in einer gewünschten Form zu halten. Die Verstärkungsfasern werden somit durch die Matrix ausgerichtet, unterstützt sowie geschützt.

Aufgrund der besseren mechanischen Fähigkeiten - vor allem im Hinblick auf die gewichtsspezifische Festigkeit und Steifigkeit - werden faserverstärkte Bauteile mit einer duroplastischen Matrix in vielen Anwendungsfällen bevorzugt. Die Vernetzung der Duroplaste bezeichnet man als Aushärtung. Hierbei kann es sich um eine vernetzende Polymerisation oder beispielsweise eine Polyaddition oder Polykondensation handeln. Da Duroplaste bzw. die duroplastische Matrix nach dem Härteprozess nicht mehr aufgeschmolzen werden kann, muss die Formgebung des faserverstärkten Duroplastbauteils vor oder während dieses Härteprozesses erfolgen. Des Weiteren ist ein unmittelbares Verschweißen eines ausgehärteten Duroplastbauteils mit einem anderen Bauteil, insbesondere Thermoplastbauteil, aufgrund dieser Eigenschaft nicht möglich.

Ein aus dem Stand der Technik bekanntes Fügeverfahren ist beispielsweise das Verkleben von Duroplastbauteilen mit Thermoplastbauteilen unter Verwendung eines Klebstoffes und/oder Haftvermittlers, insbesondere eines Primers. Nachteilig ist hierbei jedoch die lange Prozessdauer durch zusätzliche Prozessschritte und die daraus resultierenden erhöhten Kosten.

Ferner sind bekannte Fügeverfahren das form- und/oder kraftschlüssige Verbinden derartiger Bauteile. So können diese beispielsweise mittels Schrauben und/oder Nieten miteinander verbunden werden. Nachteilig hierbei jedoch ist, dass die Faserstruktur des faserverstärkten Duroplastbauteils beim Ein- und/oder Durchdringen der Befestigungsmittel beschädigt wird. Hierdurch verliert das Bauteil an Festigkeit. Alternativ oder zusätzlich können Duroplastbauteile natürlich auch nach dem Aushärten beispielsweise mit einem Thermoplastbauteil formschlüssig umspritzt werden. Jedoch kann auch auf diese Weise oft keine ausreichend feste Verbindung zwischen den beiden Bauteilen ausgebildet werden. Ferner haben alle diese vorstehend genannten Verbindungsverfahren den Nachteil, dass diese sehr aufwendig und teuer sind.

Aus der WO 2007/109855 A1 ist ein Faserverbundbauteil bekannt, das mehrere übereinander angeordnete Prepreg-Schichten umfasst. Mit der letzten Prepreg-Schicht wird eine thermoplastische Funktionsschicht verbunden.

Aus der EP 2 594 375 A1 ist ein Verfahren zur Demontage von zwei durch Ultraschall geschweißten Elementen bekannt, wobei eines der Elemente auf einer dem anderen Element zugewandten Seite einen Energierichtungsgeber aufweist, der die Erwärmung während des Ultraschallschweißens fokussiert und der eine Materialverbindung zwischen den beiden nach dem Ultraschallschweißen zusammengefügten Elementen bildet. Das Verfahren umfasst das Positionieren eines Drahtes zwischen den beiden zusammengesetzten Elementen, der den Energieleiter so schneidet, wobei der Draht geeignete mechanische Eigenschaften aufweist, die es ihm ermöglichen, die durch den Energieleiter gebildete Verbindung zu durchtrennen und den Draht zwischen den beiden zusammengesetzten Elementen zu verschieben, um die Verbindung zu durchtrennen.

Aus der US 2011/0240200 A1 ist ein Verfahren zur Bildung einer Verbindung zwischen einer ersten Komponente und einer zweiten Komponente bekannt, wobei die erste Komponente eine Vielzahl von Schichten von Fasern umfasst, die mit einer wärmehärtbaren Matrix imprägniert sind. Ein Schweißschnittstellenelement wird mit einer Anordnung von spitzen Zacken versehen. Eine oder mehrere der Faserschichten werden entweder vor oder nach der Imprägnierung der Fasern mit der wärmehärtenden Matrix mit den Zinken durchdrungen. Die erste Komponente wird durch Erhitzen der wärmehärtenden Matrix ausgehärtet, nachdem die Zinken eingebettet wurden. Es entsteht eine thermoplastische Schweißnaht zwischen der zweiten Komponente und dem Schweißschnittstellenelement.

Aus der EP 1 767 335 A2 ist eine Methode und eine Vorrichtung zum Verbinden von Verbundwerkstoffen mit thermoplastischen Oberflächen bekannt. Das Verfahren umfasst die Anordnung der genannten Komponenten innerhalb eines tragenden Rahmens und das In-Kontakt-Bringen der zu verbindenden thermoplastischen Oberflächen. Druckanwendungsvorrichtungen in Form von mit Flüssigkeit gefüllten Blasen sind ebenfalls innerhalb des Rahmens angeordnet und so angeordnet, dass der Druck gleichmäßig auf die thermoplastischen Oberflächen ausgeübt wird. Wenn die Komponenten ein hohes Maß an Krümmung oder Verdrehung aufweisen, sind zwischen dem Rahmen und den Blasen Formblöcke angeordnet, die die ungefähre Form der Komponentenoberfläche haben. Druck und Wärme werden auf den Verbindungsbereich aufgebracht und die Wärme wird abgeführt, während der Verbindungsbereich unter einem gewissen Druck gehalten wird.

Aus der WO 2012/161569 A1 ist ein Verfahren zum Verbinden eines thermoplastischen Polymers mit einer wärmehärtbaren Polymerkomponente bekannt, wobei das thermoplastische Polymer eine Schmelztemperatur hat, die die Aushärtungstemperatur des wärmehärtbaren Polymers übersteigt. Das Verfahren umfasst die Schritte des Bereitstellens einer ausgehärteten wärmehärtbaren Polymerkomponente, die ein Implantat aus einem thermoplastischen Polymer zumindest an dem zu verbindenden Teil der wärmehärtbaren Polymerkomponente umfasst, des Anordnens eines thermoplastischen Polymers in Kontakt mit zumindest dem zu verbindenden Teil, des Erhitzens der Anordnung auf die Schmelztemperatur des thermoplastischen Polymers, wodurch das thermoplastische Polymer des Implantats schmilzt und mit dem thermoplastischen Polymer verschmilzt, und des Abkühlens der Anordnung. Das thermoplastische Polymer hat eine Schmelztemperatur, die die Aushärtungstemperatur des wärmehärtbaren Polymers übersteigt, und das Implantat ist so ausgelegt, dass eine Erwärmung über die maximale Betriebstemperatur des wärmehärtbaren Polymers an der Grenzfläche des Implantats mit der Komponente des wärmehärtbaren Polymers während des Verbindungsschritts vermieden wird.

Aus der DE 10 2010 007 824 A1 ist ferner ein Herstellungs- und Fügeverfahren für duroplastische Kohlenstofffaserverbundbauteile bekannt, das einen technisch zuverlässigen Verbund mit Hilfe eines Widerstandsschweißverfahrens bereitstellt. Für das Widerstandsschweißen werden Kohlenstofffasertextilien mit Gewebestruktur oder Fließstruktur als Heizelemente verwendet, die zwischen den beiden zu verbindenden Bauteilen angeordnet werden. Die Kohlenstofffasertextilien sind auf ihrer Oberfläche mit einem Thermoplast imprägniert oder mit diesem durchgehend getränkt. Mit Hilfe jeweils eines solchen imprägnierten Kohlenstofffasertextils werden zwei duroplastische Bauteile oder ein duroplastisches mit einem thermoplastischen Bauteil über eine am duroplastischen Bauteil intermolekular angebundene Thermoplastfolie unter Druck und erhöhter Temperatur verschweißt.

Die Verwendung einer Folie hat jedoch den Nachteil, dass insbesondere bei komplexen Bauteilstrukturen nicht sichergestellt werden kann, dass die Anbindungs-Folie vollflächig an dem Duroplastbauteil anliegt. Diese sogenannten Trockenstellen schwächen den Verbindungsbereich zwischen dem Duroplastbauteil und dem damit verbundenen Bauteil. Des Weiteren gestaltet sich das Herstellungsverfahren unter Verwendung einer derartigen Folie sehr aufwendig und teuer.

Ein weiterer Nachteil dieses bekannten Verbindungsverfahren besteht darin, dass zwischen den beiden miteinander zu verbinden Bauteilen stets ein imprägniertes Kohlenstofffasertextil eingebracht werden muss. Hierdurch gestaltet sich die Verbindung des Duroplastbauteils mit einem Thermoplastbauteil sehr aufwendig und teuer. Des Weiteren besteht insbesondere bei komplexen Bauteilstrukturen die Gefahr, dass das im Verbindungsbereich angeordnete imprägnierte Kohlenstofffasertextil Falten wirft, wodurch Trockenstellen zwischen dem Kohlenstofffasertextil und zumindest einem der beiden miteinander zu verbindenden Bauteile ausgebildet werden, die wiederum zu einer Schwächung des Verbindungsbereiches führen.

Aufgabe der vorliegenden Erfindung ist es somit, ein Herstellungsverfahren für ein faserverstärktes Duroplastbauteil mit einer Funktionsschicht bereitzustellen, ein derart hergestelltes faserverstärktes Duroplastbauteil sowie ein Verbundbauteil mit einem derart hergestellten und ausgebildeten Duroplastbauteil zu schaffen, mittels dem die oben genannten Nachteile gelöst werden können.

Die Aufgabe wird gelöst durch ein Herstellungsverfahren für ein faserverstärktes Duroplastbauteil mit den Merkmalen des unabhängigen Anspruches 1, mit einem Duroplastbauteil, das mit einem Thermoplastbauteil stoffschlüssig verbindbar ist, mit den Merkmalen des unabhängigen Anspruches 6sowie ein Verbundbauteil mit den Merkmalen des unabhängigen Anspruches 12.

Vorgeschlagen wird ein Herstellungsverfahren für ein zumindest angehärtetes, insbesondere vollständig ausgehärtetes, faserverstärktes Duroplastbauteil, das mit einem dafür vorgesehenen Thermoplastbauteil stoffschlüssig verbindbar ist. Bei diesem Herstellungsverfahren wird vor oder während eines Härteprozesses auf einem noch ungehärteten duroplastischen Grundkörper zumindest in einem zum Verbinden mit dem Thermoplastbauteil vorgesehenen Fügebereich eine thermo-/duroplastische Funktionsschicht aufgebracht. Der duroplastische Grundkörper umfasst hierbei Verstärkungsfasern, insbesondere Carbonfasern, und eine viskose duroplastische Matrix. Der zumindest teilweise beschichtete Grundkörper wird in einer Aushärtevorrichtung unter Druck und/oder Hitze angehärtet und/oder ausgehärtet. Des Weiteren wird dieser hierbei vorzugsweise in seine gewünschte Endform gebracht. Während dieses Härteprozesses verbindet sich die thermo-/duroplastische Funktionsschicht stoffschlüssig mit der duroplastischen Matrix und/oder den Verstärkungsfasern des Grundkörpers. Mittels der thermo-/duroplastischen Funktionsschicht kann der angehärtete oder vollständig ausgehärtete duroplastische Grundkörper nach Beendigung seines Herstellungsverfahrens in einem anschließenden Fügeverfahren mit dem dafür vorgesehenen Thermoplastbauteil verbunden werden.

Vorgeschlagen wird somit im Wesentlichen ein Herstellungsverfahren für ein faserverstärktes Duroplastbauteil, das mit einem Thermoplastbauteil stoffschlüssig verbindbar, insbesondere verschweißbar, ist. Bei dem erfindungsgemäßen Herstellungsverfahren werden zur Ausbildung eines Grundkörpers Verstärkungsfasern, insbesondere Carbon-, Glas- und/oder Aramidfasern, mit einer viskosen duoplastischen Matrix in eine Aushärtevorrichtung eingebracht. Die Verstärkungsfasern können in Form von Kurzschnittfasern, Kurzschnittfäden, Bändern, Gewebematten, Gelegen und/oder Prepregs bereitgestellt werden. Hierbei bezeichnet der Begriff Prepreg Bänder oder Gewebematten oder Gewebegelege, die mit einem Harz vorzugsweise mit einem duroplastischen Matrixwerksstoff vorimprägniert und/oder gegebenenfalls vorgehärtet sind. Der für die duroplastische Matrix verwendete Werkstoff, ist insbesondere ein Epoxidharz oder Polyurethanharz, besonders bevorzugt ein ein-, zwei- oder dreikomponentiges Harz. Die Aushärtevorrichtung kann ein Ofen, ein Autoklav oder eine Vakuumpresse sein. Es ist aber auch jegliche andere Vorrichtung denkbar, die dazu geeignet ist die duroplastische Matrix anzuhärten und/oder auszuhärten.

Das Einbringen der Verstärkungsfasern und der duroplastischen Matrix kann ebenfalls auf unterschiedlichste Art und Weise erfolgen. So ist es beispielsweise denkbar, dass die Verstärkungsfasern einzeln, als Gewebe und/oder als Gelege in die Aushärtevorrichtung eingebracht werden und anschließend durch das Einspritzen der viskosen duroplastischen Matrix mit dieser umgeben und/oder getränkt werden. Alternativ oder zusätzlich kann die Kombination aus Verstärkungsfasern und duroplastischer Matrix aber auch als Prepreg in die Aushärtevorrichtung eingebracht werden. Selbstverständlich können auch mehrere derartige Lagen in die Aushärtevorrichtung, insbesondere auf eine Werkzeugform, aufgebracht werden.

Nachdem die Verstärkungsfasern und die viskose duroplastische Matrix in die Aushärtevorrichtung eingebracht wurde, wird die duroplastische Matrix unter Druck und/oder Hitze angehärtet und/oder ausgehärtet. Vor oder während dieses Härteprozesses wird zum Beschichten des Grundkörpers, zumindest in einem zum Verbinden mit dem Thermoplastbauteil vorgesehen Fügebereich, eine Funktionsschicht an der, insbesondere viskosen, duroplastischen Matrix und/oder an den Verstärkungsfasern angeordnet. Alternativ kann aber auch der gesamte Grundkörper mit einer derartigen Funktionsschicht überzogen werden. Die Funktionsschicht verbindet sich während des Härteprozesses stoffschlüssig mit der duroplastischen Matrix und/oder den Verstärkungsfasern.

Erfindungsgemäß wird die Funktionsschicht vor oder während des Härteprozesses auf die, insbesondere viskose, duroplastische Matrix und/oder die Verstärkungsfasern zumindest in dem Fügebereich bzw. in einem diesen Fügebereich bildenden Bereich des Verstärkungsfasern-Matrix-Verbundes aufgebracht, vorzugsweise aufgesprüht. Alternativ oder zusätzlich kann die Funktionsschicht aber auch, insbesondere vor dem Schließen der Aushärtevorrichtung, auf eine Werkzeugform der Aushärtevorrichtung zumindest in einem während des Härteprozesses an dem Fügebereich des Grundkörpers bzw. Duroplastbauteils anliegenden Bereich, gesprüht werden. Durch das Aufsprühen der Funktionsschicht können vorteilhafterweise Trockenstellen vermieden werden, in deren Bereich die Funktionsschicht nicht vollflächig am Grundkörper anliegt. Derartige Trockenstellen treten insbesondere bei komplexen Bauteilstrukturen auf, wenn als Funktionsschicht eine Folie verwendet wird. Durch das Aufsprühen der Funktionsschicht kann eine vollflächige und somit sehr feste Verbindung zwischen der Funktionsschicht und dem Grundkörper im Fügebereich sichergestellt werden. Ferner kann das faserverstärkte Duroplastbauteil, das zum Verschweißen mit einem Thermoplastbauteil geeignet ist, durch das Aufsprühen der Funktionsschicht sehr kostengünstig und schnell hergestellt werden.

Vorteilhaft ist es, wenn die Funktionsschicht als Flüssigkeit, Paste, Pulver und/oder Granulat aufgebracht, insbesondere aufgesprüht, wird. Hierdurch kann besonderes gut die Dicke der Funktionsschicht reguliert werden.

Ebenso ist es vorteilhaft, wenn die Funktionsschicht mehrschichtig ausgebildet ist, insbesondere mit einer im Wesentlichen duroplastischen ersten Schicht, einer im Wesentlichen thermoplastischen zweiten Schicht und/oder einer zwischen diesen beiden angeordneten thermo-/duroplastischen Mischschicht. Besonders bevorzugt ist es, wenn die erste Schicht mit dem Grundkörper die Adhäsions-Grenzfläche und die zweite Schicht die Verbindungsfläche zum Verbinden, insbesondere Verschweißen, mit dem dafür vorgesehenen Thermoplastbauteil ausbildet. Vorteilhafterweise werden die Schichten nacheinander auf die Werkzeugform und/oder den Grundkörper aufgebracht, insbesondere aufgesprüht.

Auch ist es vorteilhaft, wenn die Viskosität des aufgesprühten Materials, das die Funktionsschicht bildet, derart gewählt wird, dass das Material die Werkzeugform und/oder den Grundkörper, insbesondere bei einer komplexen Bauteilgeometrie, geleichmäßig benetzt und/oder im Wesentlichen nicht wegzufließen vermag, wodurch die Funktionsschicht vor oder während des Härteprozesses aufreißen würde.

Eine ausreichend feste Verbindung zwischen der Funktionsschicht und der duroplastischen Matrix und/oder den Verstärkungsfasern kann sichergestellt werden, wenn sich die Funktionsschicht mit der duroplastischen Matrix und/oder den Verstärkungsfasern während des Härteprozesses durch Adhäsion verbindet. Die duroplastische Matrix und/oder die Verstärkungsfasern sind somit mit der Funktionsschicht unmittelbar angebunden, insbesondere verklebt, ohne die Verwendung von Zusatzmitteln, wie beispielsweise einem Klebstoff und/oder Primer. Zwischen der Funktionsschicht und der duroplastischen Matrix und/oder den Verstärkungsfasern wird somit eine Adhäsions-Grenzfläche ausgebildet. Die Funktionsschicht weist hierdurch eine sehr feste Verbindung mit der duroplastischen Matrix und/oder den Verstärkungsfasern auf, so dass ein Ablösen der Funktionsschicht vom Grundkörper im Wesentlichen ausgeschlossen ist.

Vorteilhaft ist es, wenn bei der Ausbildung der Adhäsions-Grenzfläche die duroplastischen Anteile der thermo-/duroplastischen Funktionsschicht während des Härteprozesses in Richtung der Adhäsions-Grenzfläche und die thermoplastischen Anteile von dieser weg wandern. Hierdurch kann eine stärkere Bindung zwischen der Funktionsschicht und dem Grundkörper sowie dem dafür vorgesehenen Thermoplastbauteil bewirkt werden.

Vorteilhafterweise wird die duroplastische Matrix in einem Nassimprägnierverfahren, insbesondere vor dem Aufsprühen der Funktionsschicht, auf die Verstärkungsfasern aufgesprüht, in einem Injektionsverfahren, insbesondere nach dem Aufsprühen der Funktionsschicht, in die Aushärtevorrichtung eingespritzt und/oder zusammen mit den Verstärkungsfasern als Prepreg in die Aushärtevorrichtung eingebracht.

Ebenso ist es vorteilhaft, wenn die Werkzeugform der Aushärtevorrichtung vor dem Aufsprühen der Funktionsschicht vorgewärmt und/oder während des Härteprozesses auf einer, vorzugsweisen konstanten, Temperatur gehalten wird. Bevorzugt ist es, wenn die Temperatur höher oder gleich der Aushärtetemperatur der duroplastischen Matrix und/oder des in der Funktionsschicht verwendeten Duroplasten, vorzugsweise zwischen 100 °C und 200 °C, besonders bevorzugt 120 °C, und niedriger als die Schmelztemperatur des in der Funktionsschicht verwendeten Thermoplasten, vorzugsweise zwischen 100 °C und 300 °C, besonders bevorzugt 200 °C, ist. Aufgrund dessen, dass die Schmelztemperatur des Thermoplasten höher ist als die Aushärtetemperatur des Duroplasten härtet der Duroplast aus, ohne dass der Thermoplast vollständig aufschmilzt. Vorteilhafterweise kann somit vermieden werden, dass die Funktionsschicht bereichsweise aufreißt, da ein über die Schmelztemperatur erhitzter Thermoplast aufgrund seiner hierdurch steigenden Viskosität wegfließen würde. Ein weiterer Vorteil der vorstehend genannten Temperaturbereiche besteht darin, dass insbesondere bei einer thermo-/duroplastischen Funktionsschicht die auf die Aushärtetemperatur erhitzten Duroplaste vermehrt in Richtung des Grundkörpers, d.h. in Richtung der auszubildenden Adhäsions-Grenzfläche, wandern, wohingegen die thermoplastischen Anteile der Funktionsschicht vermehrt in Richtung der Fügefläche wandern, in deren Bereich das faserverstärkte Duroplastbauteil zu einem späteren Zeitpunkt mit dem dafür vorgesehen Thermoplastbauteil verbunden, insbesondere verschweißt werden kann. Hierdurch wird vorteilhafterweise zwischen der Funktionsschicht und dem faserverstärkten Duroplastbauteil die Klebeverbindung im Bereich der Adhäsions-Grenzfläche fester. Zugleich wird aber auch die Verbindungsqualität des faserverstärkten Duroplastbauteils mit dem dafür vorgesehenen Thermoplastbauteil durch die höhere Thermoplastkonzentration im Fügebereich der Funktionsschicht verbessert.

Erfindungsgemäß weist das Duroplastbauteil, das mit einem Thermoplastbauteil verbindbar, insbesondere verschweißbar, ist, einen Grundkörper auf, der in einer ausgehärteten duroplastischen Matrix eingebundene Verstärkungsfasern, insbesondere Carbon-, Glas- und/oder Aramidfasern, umfasst und der zumindest in einem zum Verbinden mit dem Thermoplastbauteil vorgesehen Fügebereich mit einer Funktionsschicht ausgebildet, insbesondere beschichtet, ist. Die Funktionsschicht ist eine thermo-/duroplastische Funktionsschicht. Vorteilhafterweise kann somit das Duroplastbauteil schnell und unkompliziert im Rahmen eines Schweißverfahrens oder Spritzgießverfahrens mit einem Thermoplastbauteil verbunden werden.

Eine besonders feste Verbindung zwischen dem Grundkörper und der Funktionsschicht sowie zwischen der Funktionsschicht und dem zum Verbinden, insbesondere Verschweißen, mit dieser bzw. mit dem Duroplastbauteil vorgesehenen Thermoplastbauteil kann mit einer thermo-/duroplastischen Funktionsschicht sichergestellt werden. So bewirken insbesondere die Duroplaste der Funktionsschicht die Ausbildung einer besonders festen Verbindung, insbesondere Klebeverbindung, zwischen dem im Wesentlichen duroplastischen Grundkörper und der Funktionsschicht. Zugleich bewirken die Thermoplaste der Funktionsschicht ein Verbinden, insbesondere Verschweißen, mit dem dafür vorgesehenen Thermoplastbauteil unter Ausbildung eines besonders festen Stoffschlusses, insbesondere einer Schweißverbindung.

Vorteilhafterweise ist die Funktionsschicht eine Sprühschicht oder eine Folie. Eine als Sprühschicht ausgebildete Funktionsschicht zeichnet sich insbesondere dadurch aus, dass zwischen dieser und dem Grundkörper im Wesentlichen keine Trockenstellen ausgebildet sind. Infolgedessen liegt die Funktionsschicht bzw. die Sprühschicht vollflächig am Grundkörper an. Vorzugsweise ist die Sprühschicht nach einem Herstellungsverfahren gemäß der vorstehenden Beschreibung ausgebildet, wobei die genannten Merkmale einzeln oder in beliebiger Kombination vorhanden sein können.

Eine besonders feste Verbindung zwischen der Funktionsschicht und dem Grundkörper kann sichergestellt werden, wenn zwischen diesen beiden eine Adhäsions-Grenzfläche ausgebildet ist. Die Funktionsschicht ist mit dem Grundkörper, insbesondere mit der duroplastischen Matrix und/oder den Verstärkungsfasern, somit unmittelbar verbunden, insbesondere verklebt.

Auch ist es vorteilhaft, wenn der Duroplast der thermo-/duroplastischen Funktionsschicht mit dem der duroplastischen Matrix gleich oder zumindest weitestgehend ähnlich ist. Hierdurch kann eine sehr feste Verbindung zwischen der Funktionsschicht und dem Grundkörper, insbesondere dessen duroplastischer Matrix und/oder Verstärkungsfasern, sichergestellt werden.

Vorzugsweise ist der in der Funktionsschicht verwendete Thermoplast Acrylnitril-Butadien-Styrol (ABS) oder Polyamid, insbesondere Polyamid 11 oder 12. Alternativ ist aber auch ebenso jeder andere technisch verwendbare Thermoplast denkbar. Als Duroplast wird ein, insbesondere ein-, zwei- oder dreikomponentiges, Epoxidharz oder Polyurethanharz bevorzugt.

Um eine hochfeste Verbindung der Funktionsschicht am Grundkörper sicherzustellen und zugleich die Eigenschaften dieser Funktionsschicht zum Verbinden mit dem dafür vorgesehen Thermoplastbauteil dahingehend zu optimieren, dass die Funktionsschicht eine besonders feste Verbindung zwischen dem Thermoplastbauteil und dem faserverstärkten Duroplastbauteil ausbildet, ist es vorteilhaft, wenn der Duroplastanteil der thermo-/duroplastischen Funktionsschicht im Bereich der Adhäsions-Grenzfläche größer ist als im Bereich ihrer zum Fügen mit dem Thermoplastbauteil vorgesehenen Verbindungsfläche. So bewirken die im Verbindungsbereich mit dem Grundkörper in höherer Konzentration vorhandenen Duroplastteilchen der thermo-/duroplastischen Funktionsschicht, dass die Funktionsschicht besonders fest mit der duroplastischen Matrix des faserverstärkten Grundkörpers verbunden, insbesondere verklebt, ist. Zugleich verbessern die an der Verbindungsoberfläche der Funktionsschicht mit höherer Konzentration vorhandenen Thermoplastteilchen, dass sich die Funktionsschicht besonders fest mit dem dafür vorgesehen Thermoplastbauteil verbindet.

Vorteilhafterweise ist der Thermoplastanteil der thermo-/duroplastischen Funktionsschicht höher oder gleich dem Duroplastanteil. So ermöglichen insbesondere die Thermoplastanteile der thermo-/duroplastischen Funktionsschicht ein Verbinden, insbesondere Verschweißen, des ausgehärteten faserverstärkten Duroplastbauteils mit dem dafür vorgesehen Thermoplastbauteil. Bei einem zueinander im Wesentlichen ausgeglichenen Verhältnis von Thermoplaste zu Duroplaste kann vorteilhafterweise eine sehr feste Klebeverbindung zwischen der Funktionsschicht und dem faserverstärkten Duroplastbauteil sowie eine besonders feste Verbindung, insbesondere Schweißverbindung, der Funktionsschicht mit dem dafür vorgesehen Thermoplastbauteil sichergestellt werden.

In einer vorteilhaften Weiterbildung der Erfindung weist die Funktionsschicht, insbesondere über ihre gesamte Fläche, eine Dicke von 10 µm bis 1000 µm, insbesondere von 150 µm bis 750 µm, auf. Die Funktionsschicht weist besonders bevorzugt im Wesentlichen über ihre gesamte Fläche eine homogene Dicke auf. Hierdurch kann sichergestellt werden, dass beim Aufschweißen des dafür vorgesehen Thermoplastbauteils die Funktionsschicht nicht vollständig durchschmolzen wird, so dass das Thermoplastbauteil unmittelbar am Duroplastbauteil anliegen würde. Dies hätte nämlich eine Schwächung des Verbindungsbereiches zwischen den beiden, insbesondere miteinander verschweißten, Bauteilen zur Folge. Insbesondere durch das Sprühverfahren kann eine besonders dünne Funktionsschicht ausgebildet werden. Durch eine sehr dünne Funktionsschicht können die Herstellungskosten des faserverstärkten Duroplastbauteils reduziert werden.

Ferner können insbesondere durch das vorstehend erwähnte Sprühverfahren Trockenstellen zwischen der Funktionsschicht und dem Grundkörper vermieden werden. Vorteilhafterweise liegt die Funktionsschicht somit vollflächig an dem Grundkörper an, so dass die Funktionsschicht sehr fest mit dem Grundkörper, insbesondere über deren gesamten Kontaktbereich, verklebt ist.

Vorteilhaft ist es, wenn das Duroplastbauteil bzw. der Grundkörper in mehreren voneinander beabstandeten oder zumindest teilweise überlappenden Bereichen mit einer Funktionsschicht beschichtet ist. Somit kann das Duroplastbauteil vorteilhafterweise an mehreren Stellen mit einem oder mehreren Thermoplastbauteilen verbunden, insbesondere verschweißt, werden. Auch ist es vorteilhaft, wenn die Funktionsschichten zueinander eine gleiche und/oder unterschiedliche Dicke aufweisen.

In einem Verfahren zum Fügen eines Duroplastbauteils mit einem Thermoplastbauteil durch stoffschlüssige Verbindung, insbesondere Verschweißen, werden diese beiden Bauteile mittels einer Funktionsschicht des Duroplastbauteils miteinander verbunden. Hierbei wird das Thermoplastbauteil unmittelbar auf der Funktionsschicht des Duroplastbauteils angebunden, insbesondere aufgeschweißt, wobei zwischen dem Thermoplastbauteil und der Funktionsschicht des Duroplastbauteils ein Diffusionsbereich ausgebildet wird. Ein Diffusionsbereich zeichnet sich durch einen gleichmäßigen Materialübergang vom Thermoplastbauteil zur Funktionsschicht des Duroplastbauteils aus. Der Diffusionsbereich weist vorzugsweise eine Dicke von ca. 20 µm bis 40 µm auf. Der Diffusionsbereich gewährleistet eine sehr feste Verbindung zwischen dem aufgebrachten, insbesondere aufgeschweißten, Thermoplastbauteil und dem insbesondere faserverstärkten Duroplastbauteil. Ferner stellt dieses Fügeverfahren eine sehr kostengünstige und schnelle Verbindung von insbesondere faserverstärkten Duroplastbauteilen mit Thermoplastbauteilen dar.

Das Duroplastbauteil ist gemäß der vorrangegangenen Beschreibung hergestellt und/oder ausgebildet, wobei die genannten Verfahrensschritte sowie Merkmale einzeln oder in beliebiger Kombination vorhanden sein können.

Eine besonders schnelle und unkomplizierte Verbindung des Duroplastbauteils mit dem Thermoplastbauteil kann erfolgen, wenn das Thermoplastbauteil und/oder die Funktionsschicht des Duroplastbauteils, insbesondere bereichsweise, vorgewärmt und/oder aufgeschmolzen wird und das, vorzugsweise bereichsweise, aufgeschmolzene Thermoplastbauteil auf die Funktionsschicht des Duroplastbauteils gepresst wird.

Alternativ kann das Duroplastbauteil, insbesondere in einem Spritzgießverfahren, aber auch als, insbesondere vorgehärteter oder ausgehärteter, Einleger in eine Spritzgussform eingelegt werden und anschließend, insbesondere bei geschlossenem Werkzeug, mit einer das Thermoplastbauteil bildenden Thermoplastschmelze verspritzt werden. Hierbei wird das Thermoplastbauteil als Thermoplastschmelze direkt auf die Funktionsschicht des Duroplastbauteils gespritzt. Dieses Herstellungsverfahren eignet sich besonders für komplexe Verbundbauteile mit einer durch das faserverstärkte Duroplastbauteil gebildeten Außenkontur, Oberfläche und/oder Hülle und einem durch das Thermoplastbauteil gebildeten Funktionselement, insbesondere einer Strebe, einem Halteelement und/oder einem Befestigungsmittel, das vorzugsweise auf der Innenseite des Duroplastbauteils aufgespritzt wird. Geeignete Spritzgussformen umfassen zwei oder mehrere Gussformteile. Eines oder mehrere der Gussformteile weisen einen oder mehrere Einspritzkanäle auf, durch welche der viskose Thermoplastwerkstoff injiziert wird.

Erfindungsgemäß weist das Verbundbauteil zumindest ein Duroplastbauteil und zumindest ein Thermoplastbauteil auf, die mittels zumindest einer Funktionsschicht miteinander verbunden sind. Das Thermoplastbauteil ist unmittelbar mit der Funktionsschicht des Duroplastbauteils verbunden, insbesondere verschweißt. Hierdurch können sehr schnell und kostengünstig derartige Verbundbauteile hergestellt werden. Zwischen dem Thermoplastbauteil und der Funktionsschicht ist ein Diffusionsbereich ausgebildet. Hierdurch wird eine besonders feste Verbindung zwischen dem Thermoplastbauteil und dem Duroplastbauteil sichergestellt.

Das Duroplastbauteil ist gemäß der vorangegangenen Beschreibung hergestellt und ausgebildet, wobei die genannten Verfahrensmerkmale sowie körperlichen Merkmale einzeln oder in beliebiger Kombination vorhanden sein können. Vorteilhaft ist es, wenn das Duroplastbauteil gemäß der vorangegangenen Beschreibung mit dem Thermoplastbauteil verbunden ist, wobei die genannten Merkmale einzeln oder in beliebiger Kombination vorhanden sein können.

Um eine besonders feste Verbindung zwischen dem Duroplastbauteil und dem Thermoplastbauteil sicherzustellen, ist es vorteilhaft, wenn das Thermoplastbauteil im Verbindungsbereich mit dem Duroplastbauteil von dessen duroplastischen Grundkörper durch die Funktionsschicht beabstandet ist. Die Funktionsschicht wird somit beim Aufbringen, insbesondere Aufschweißen, des Thermoplastbauteils nicht vollständig durchdrungen. Stattdessen wird eine sehr feste Verbindung zwischen dem Thermoplastbauteil und dem Duroplastbauteil über ihren gesamten Kontaktbereich mittels der Funktionsschicht sichergestellt, da diese durch die Verklebung mit dem Grundkörper eine Adhäsions-Grenzfläche sowie durch das Verbinden, insbesondere Verschweißen, mit dem Thermoplastbauteil einen Diffusionsbereich ausgebildet hat.

Auch ist es vorteilhaft, wenn der Thermoplast des Thermoplastbauteils mit dem der thermo-/duroplastischen Funktionsschicht gleich oder zumindest weitestgehend ähnlich ist. Hierdurch kann ein Diffusionsbereich ausgebildet werden, der eine sehr feste Verbindung des Thermoplastbauteils mit dem Duroplastbauteils sicherstellt.

Insbesondere bei einer thermo-/duroplastischen Funktionsschicht ist die Anbindungsfläche, an die das Thermoplastbauteil aufgebracht, insbesondere aufgeschweißt, wird, im Verhältnis zu dem die Adhäsions-Grenzfläche ausbildenden Bereich mit einem höheren Thermoplastanteil ausgebildet. Infolgedessen bildet die im Fügebereich mit dem Thermoplastbauteil bzw. mit der Anbindungsfläche der Funktionsschicht mit höheren Thermoplastanteilen bzw. einer höheren Thermoplastkonzentration ausgebildete Funktionsschicht eine sehr feste Verbindung mit dem daran aufgeschweißten Thermoplastbauteil aus. Als Thermoplast eigenen sich alle industriell anwendbaren Thermoplaste, insbesondere ABS und/oder Polyamide, insbesondere Polyamid 11 und/oder 12.

Weitere Vorteile der Erfindung sind in den nachfolgenden Ausführungsbeispielen beschrieben. Es zeigt:
- **Figur 1**: einen Bereich eines faserverstärkten Duroplastbauteils mit einer Funktionsschicht im Querschnitt,
- **Figur 2**: jeweils einen Bereich des faserverstärkten Duroplastbauteil und eines Thermoplastbauteils vor dem Fügen, insbesondere Verschweißen, im Querschnitt und
- **Figur 3**: einen Verbindungsbereich eines Verbundbauteils mit einem an eine Funktionsschicht des Duroplastbauteils angebundenen, insbesondere angeschweißten, Thermoplastbauteil im Querschnitt.

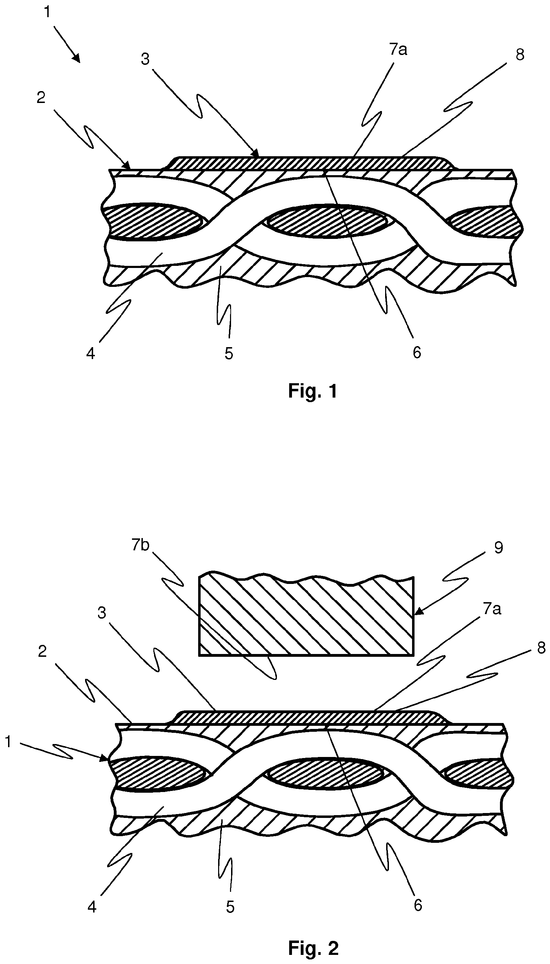

Figur 1 zeigt einen Querschnitt durch ein Duroplastbauteil 1, das einen Grundkörper 2 und eine Funktionsschicht 3 umfasst. Das Duroplastbauteil 1 ist vorliegend als faserverstärktes Duroplastbauteil ausgebildet. So umfasst der Grundkörper 2 Verstärkungsfasern 4, die in einer Matrix 5 aus Kunststoff eingebettet sind. Die Verstärkungsfasern können Glas-, Carbon- und/oder Aramidfasern sein. Im vorliegenden Ausführungsbeispiel sind die Verstärkungsfasern 4 als Carbonfasern ausgebildet. Die Carbonfasern können als Kurzschnittfasern, Kurzschnittfäden, Bänder oder wie vorliegend als Gewebematte in dem Grundkörper 2 ausgebildet sein. Ferner ist es ebenso denkbar, dass die Verstärkungsfasern als Gelege, das heißt zumindest zwei übereinander gelegte Gewebematten, eingebracht sind. Die Matrix 5 ist vorliegend ein duroplastischer Kunststoff, insbesondere ein Epoxidharz oder Polyurethanharz. Die duroplastische Matrix 5 ist vorliegend ausgehärtet und verleiht den Verstärkungsfasern 4 Formstabilität. Die Verstärkungsfasern 4 dienen in erster Linie dafür, dem Grundkörper 2 bzw. dem Duroplastbauteil 1 die nötige Festigkeit zu verleihen.

Der duroplastische Grundkörper 2 kann jede beliebige Form aufweisen. So kann der Grundkörper 2 beispielsweise ein Karosseriebauteil eines Fahrzeugs oder aber auch eine Innenverkleidung eines solchen sein. Für gewöhnlich weisen derartige durpolastische Grundkörper bzw. Duroplastbauteile eine komplexe Bauteilgeometrie, insbesondere mit Freiformflächen und/oder Hinterschneidungen, auf.

Ein grundlegendes Problem derartiger duroplastischer Bauteile besteht darin, dass diese nach ihrer Aushärtung nur in sehr aufwendigen und teuren Verfahren mit weiteren Bauteilen verbunden werden können. Diese Verfahren haben ferner den Nachteil, dass die Verbindungsqualität nicht besonders gut ist, so dass die Gefahr besteht, dass sich die beiden Bauteile bei Belastung voneinander lösen.

Erfindungsgemäß weist das Duroplastbauteil 1 gemäß Figur 1 deshalb die Funktionsschicht 3 auf. Die Funktionsschicht 3 ist ein Thermoplast oder eine Mischung aus einem Thermoplast und einem Duroplast. Bei einer thermo-/duroplastischen Funktionsschicht 3 ist das Anteilsverhältnis von Duroplast zu Thermoplast vorzugsweise 1/4, 1/3, 1/2 oder in besonders bevorzugter Weise 1/1.

Die Funktionsschicht 3 ist unmittelbar mit dem Grundkörper 2 mittels Adhäsion verbunden, insbesondere verklebt. Zwischen der Funktionsschicht 3 und dem Grundkörper 2 ist somit eine Adhäsions-Grenzfläche 6 ausgebildet. Die Funktionsschicht 3 kann hierbei wie in Figur 1 dargestellt ausschließlich mit der duroplastischen Matrix 5 des Grundkörpers verbunden sein oder aber auch zusätzlich oder alternativ mit den Verstärkungsfasern 4. Die Adhäsions-Grenzfläche 6 stellt einen klaren Übergang von der duroplastischen Matrix 5 zu der thermo-/duroplastischen Funktionsschicht 3 dar. Zwischen diesen ist kein Diffusionsbereich ausgebildet. Auch ist kein Verbindungsmittel, insbesondere Klebstoff und/oder Primer, angeordnet.

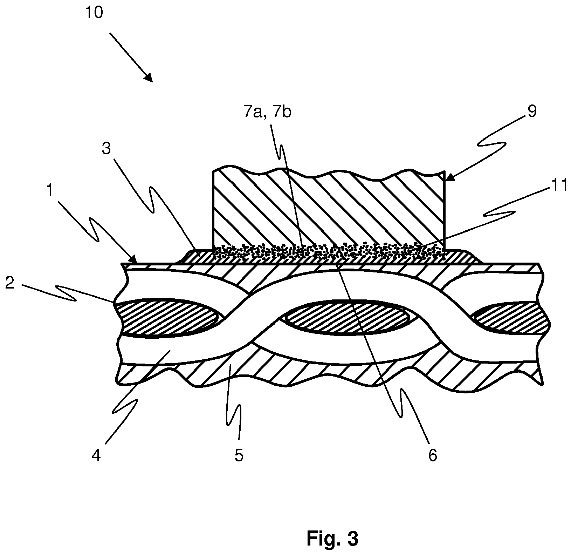

Die Funktionsschicht 3 ist in einem Fügebereich 7a des Duroplastbauteils 1 angeordnet. An ihrer dem Grundkörper 2 abgewandten Seite weist die Funktionsschicht 3 eine Verbindungsfläche 8 auf, an der das Duroplastbauteil 1 mit einem dafür vorgesehen Thermoplastbauteil 9 verbunden, insbesondere verschweißt, werden kann (vgl. Figur 2 und 3). Das Duroplastbauteil 1 kann auch mehrere derart ausgebildete Fügebereiche 7a aufweisen, in denen es mit einem oder mehreren Thermoplastbauteilen 9 verbunden, insbesondere verschweißt, werden kann.

Im Vergleich zum Grundkörper 2 ist die Funktionsschicht 3 sehr dünn ausgebildet. Vorzugsweise weist sie eine Dicke von 10 µm bis 1.000 µm, insbesondere von 150 µm bis 750 µm, auf. Besonders bevorzugt ist jedoch eine sehr dünne Funktionsschicht 3 mit einer Dicke von 10 µm bis 250 µm, insbesondere bis 200 µm, besonders bevorzugt bis 150 µm.

Derart dünne Funktionsschichten können durch ein Sprühverfahren ausgebildet werden. Hierfür werden zur Ausbildung des Grundkörpers 2 die Verstärkungsfasern 4, insbesondere Carbonfasern, mit der viskosen duroplastischen Matrix 5 in eine hier nicht dargestellte Aushärtevorrichtung eingebracht. Eine derartige Aushärtevorrichtung kann beispielsweise ein Ofen, ein Autoklav oder eine Vakuumpresse sein. In dieser Aushärtevorrichtung wird die duroplastische Matrix 5 unter Druck und/oder Hitze angehärtet und/oder ausgehärtet. Vor diesem Härteprozess wird jedoch in dem Fügebereich 7a, in welchem das Duroplastbauteil 1 mit dem dafür vorgesehen Thermoplastbauteil 9 verbunden, insbesondere verschweißt, werden soll, mit der Funktionsschicht 3 versehen.

Zum Ausbildung einer derartigen, im Vergleich zu Folien sehr dünnen, Funktionsschicht 3 wird diese vor oder während des Härteprozesses auf die viskose duroplastische Matrix 5 und/oder die Verstärkungsfasern 4 aufgesprüht. Alternativ oder zusätzlich kann der die Funktionsschicht 3 bildende Thermoplast oder die thermo-/duroplastische Mixtur auf eine hier nicht dargestellte Werkzeugform der Aushärtevorrichtung aufgesprüht werden. Hierbei ist es besonders vorteilhaft, wenn der Thermoplast und/oder Duroplast, mit welchem die Funktionsschicht 3 ausgebildet wird, in demjenigen Bereich der Werkzeugform aufgesprüht wird, der während des Härteprozesses an dem Fügebereich 7a des Grundkörpers 2 anliegt. Ein Kontakt zwischen der Funktionsschicht 3 und dem Grundkörper 2 kann nach dem Aufsprühen der Funktionsschicht 3 auf die Werkzeugform durch das Einlegen der Verstärkungsfasern 4 zusammen mit der viskosen duroplastischen Matrix 5, insbesondere als Prepreg, in die Werkzeugform erfolgen. Alternativ kann ein Kontakt aber auch erst beim Schließen des Werkzeuges und/oder beim Einspritzen der viskosen duroplastischen Matrix 5 in das geschlossene Werkzeug erfolgen. Die sehr feste Adhäsions-Grenzfläche 6, mittels derer die Funktionsschicht 3 mit dem Grundkörper 2 verbunden ist, wird während des anschließenden Härteprozesses ausgebildet, wobei keine zusätzlichen Klebstoffe und/oder Primer Verwendung finden.

Ein wesentlicher Vorteil des Verfahrens, bei dem die Funktionsschicht 3 aufgesprüht wird, besteht darin, dass die Funktionsschicht 3 vollflächig an dem Grundkörper 2 anliegt. Dies macht sich insbesondere bei einer komplexen Bauteilgeometrie bemerkbar, da in diesem Fall eine als Folie ausgebildeten Funktionsschicht 3 sogenannte Trockenstellen ausbilden würde, die letztendlich die Verbindung zwischen Funktionsschicht 3 und Grundkörper 2 schwächen würden.

Eine sehr gute Verklebung der Funktionsschicht 3 mit dem Grundkörper 2 und zugleich eine sehr feste in Figur 3 dargestellte Verbindung, insbesondere Schweißverbindung, mit dem dafür vorgesehen Thermoplastbauteil 9 kann sichergestellt werden, wenn die Funktionsschicht 3 sowohl thermoplastische als auch duroplastische Anteile aufweist. Eine derartige thermo-/duroplastische Funktionsschicht 3 zeichnet sich insbesondere dadurch aus, dass die duroplastischen Anteile der Funktionsschicht 3 im Bereich der Adhäsions-Grenzfläche 6 höher sind als im Bereich der zum Verbinden mit dem dafür vorgesehen Thermoplastbauteil 9 vorgesehenen Verbindungsfläche 8. Ferner wird eine sehr starke Verklebung zwischen Funktionsschicht 3 und Grundkörper 2 begünstigt, wenn der Duroplast der thermo-/duroplastischen Funktionsschicht 3 mit dem der duroplastischen Matrix 5 gleich oder zumindest weitestgehend ähnlich ist. Als Duroplast eigenen sich hierfür vorzugsweise Epoxidharze oder Polyurethanharze.

Figur 2 zeigt im Querschnitt einen Teilbereich des faserverstärkten Duroplastbauteils 1 vor dem Verbinden, insbesondere Verschweißen, mit dem Thermoplastbauteil 9. Hierfür kann das faserverstärkte Duroplastbauteil 1 als Einleger in eine hier nicht dargestellte Spritzgussvorrichtung eingelegt sein und durch unmittelbares Ausspritzen des als Thermoplastschmelze vorliegenden Thermoplastbauteils 9 im Bereich des Fügebereiches 7a des Duroplastbauteils 1 mit diesem gefügt, insbesondere verschweißt, werden. Die Thermoplastschmelze verbindet, insbesondere verschweißt, sich somit mit der Funktionsschicht 3 des Duroplastbauteils 1 und bildet zugleich im Zusammenspiel mit der Spritzgussform das Thermoplastbauteil 9 in seiner endgültigen Form als Funktionselement aus.

Alternativ kann das, insbesondere als Funktionselement, fertig ausgebildete Thermoplastbauteil 9 aber auch in seinem Fügebereich 7b bereichsweise vorgewärmt und/oder aufgeschmolzen werden und währenddessen oder nach diesem Vorwärm- und/oder Aufschmelzvorgang mit seinem aufgeschmolzenen Fügebereich 7b auf die Funktionsschicht 3 des Duroplastbauteils 1 in dessen Fügebereichs 7a aufgepresst werden. Hierbei wird das Thermoplastbauteil 9 mit der Funktionsschicht 3 verschmolzen. Zusätzlich oder alternativ kann auch die Funktionsschicht 3 vorgewärmt und/oder aufgeschmolzen werden. Dieser Fügeprozess kann in einer dafür ausgebildeten Fügevorrichtung erfolgen.

Mittels beider vorstehend genannter Verfahrensweisen wird ein in Figur 3 dargestelltes Verbundbauteil 10 hergestellt. Dieses zeichnet sich dadurch aus, dass das Thermoplastbauteil 9 mit dem faserverstärkten Duroplastbauteil 1 verbunden, insbesondere verschweißt, ist, wobei die Verbindung zwischen diesen beiden Bauteilen durch die Funktionsschicht 3 bewirkt wird. Beim Verbinden, insbesondere Verschweißen, des Thermoplastbauteils 9 mit dem Duroplastbauteil 1 wird zwischen der Funktionsschicht 3 des Duroplastbauteils 1 und dem Thermoplastbauteil 9 ein Diffusionsbereich 11 ausgebildet. Dieser Diffusionsbereich 11 ist besonders fest ausgebildet, wenn der Thermoplast des Thermoplastbauteils 9 mit dem der thermo-/duroplastischen Funktionsschicht 3 gleich oder zumindest weitestgehend ähnlich ist. Hierfür eignet sich jeder beliebige industriell verwendbare Thermoplast. Besonders bevorzugt ist jedoch ABS und/oder ein Polyamid, insbesondere Polyamid 11 und/oder 12.

Wie in der in Figur 3 dargestellten Querschnittsansicht zu erkennen ist, ist die Funktionsschicht 3 nicht gänzlich aufgeschmolzen. Der faserverstärkte duroplastische Grundkörper 2 des Duroplastbauteils 1 und das damit verbundene Thermoplastbauteil 9 sind somit durch einen verbleibenden Teil der oder thermo-/duroplastischen Funktionsschicht 3 voneinander beabstandet. Die Fügebereiche 7a, 7b der beiden Bauteile sind gemäß Figur 3 ineinander verschmolzenen und bilden hierdurch den Diffusionsbereich 11 aus, der eine sehr feste Verbindung zwischen dem Thermoplastbauteil 9 und dem Duroplastbauteil sicherstellt.

Die Figuren 1 bis 3 zeigen jeweils nur einen Ausschnitt eines Duroplastbauteils 1 und/oder Thermoplastbauteils 9 bzw. eines diese beiden Bauteile umfassenden Verbundbauteils 10. Das Duroplastbauteil 1 kann mehrere derartig ausgebildete Fügebereiche 7a aufweisen in denen dieses mit einem oder mehreren Thermoplastbauteilen 9 verbindbar bzw. verbunden ist. Die Thermoplastbauteile 9 sind vorzugsweise Funktionselemente, insbesondere Versteifungsstreben und/oder Befestigungsbereiche, vorzugsweise Klipse, Ösen oder dergleichen. Auch ist es denkbar, dass das Duroplastbauteil 1 vollflächig mit einer entsprechenden Funktionsschicht 3 beschichtet ist. Hierfür bietet es sich an, das Duroplastbauteil 1, insbesondere dessen Grundkörper 2, vor dessen Aushärtung vollflächig mit einem als Flüssigkeit, Paste, Pulver und/oder Granulat vorliegenden Thermoplasten zur Ausbildung der Funktionsschicht 3 zu besprühen.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Duroplastbauteil
- 2: Grundkörper
- 3: Funktionsschicht
- 4: Verstärkungsfasern
- 5: duroplastische Matrix
- 6: Adhäsions-Grenzfläche
- 7: Fügebereich
- 8: Verbindungsfläche
- 9: Thermoplastbauteil
- 10: Verbundbauteil
- 11: Diffusionsbereich

## Patentansprüche

1. Herstellungsverfahren für ein zumindest angehärtetes faserverstärktes Duroplastbauteil (1), das mit einem Thermoplastbauteil (9) stoffschlüssig verbindbar ist,
bei welchem vor oder während eines Härteprozesses auf einem noch ungehärteten duroplastischen Grundkörper (2), der Verstärkungsfasern (4) und eine viskose duroplastische Matrix (5) umfasst, zumindest in einem zum Verbinden mit dem Thermoplastbauteil (9) vorgesehenen Fügebereich (7a) eine Funktionsschicht (3) aufgebracht wird, dass der zumindest teilweise beschichtete Grundkörper (2) in einer Aushärtevorrichtung unter Druck und/oder Hitze angehärtet und/oder ausgehärtet wird,
wobei sich während dieses Härteprozesses die Funktionsschicht (3) stoffschlüssig mit der duroplastischen Matrix (5) und/oder den Verstärkungsfasern (4) des Grundkörpers (2) verbindet,
so dass der zumindest angehärtete Grundkörper (2) nach Beendigung des Herstellungsverfahrens mittels der Funktionsschicht (3) in einem anschließenden Fügeverfahren mit dem dafür vorgesehenen Thermoplastbauteil (9) verbunden werden kann
**dadurch gekennzeichnet,**
**dass** eine thermo-/duroplastische Funktionsschicht (3) aufgebracht wird.

2. Herstellungsverfahren nach dem vorherigen Anspruch, **dadurch gekennzeichnet, dass** die thermo-/duroplastische Funktionsschicht (3), insbesondere als Flüssigkeit, Paste, Pulver und/oder Granulat, auf eine Werkzeugform der Aushärtevorrichtung, zumindest in einem während des Härteprozesses an dem Fügebereich (7a) anliegenden Bereich der Werkzeugform, aufgebracht wird und/oder beim Schließen der Werkzeugform auf den ungehärteten Grundkörper übertragen wird.

3. Herstellungsverfahren nach einem oder mehreren der vorherigen Ansprüche, **dadurch gekennzeichnet, dass** sich die thermo-/duroplastische Funktionsschicht (3) mit der duroplastischen Matrix (5) und/oder den Verstärkungsfasern (4) während des Härteprozesses durch Adhäsion verbindet, insbesondere unmittelbar mit dieser verklebt, so dass zwischen diesen beiden eine Adhäsions-Grenzfläche (6) ausgebildet wird,
wobei vorzugsweise die duroplastischen Anteile der thermo-/duroplastischen Funktionsschicht (3) während des Härteprozesses in Richtung der Adhäsions-Grenzfläche (6) und die thermoplastischen Anteile von dieser weg wandern.

4. Herstellungsverfahren nach einem oder mehreren der vorherigen Ansprüche, **dadurch gekennzeichnet, dass** die duroplastische Matrix (5) in einem Nassimprägnierverfahren auf die Verstärkungsfasern (4) aufgesprüht, in einem Injektionsverfahren in die Aushärtevorrichtung eingespritzt oder zusammen mit den Verstärkungsfasern (4) als Prepreg in die Aushärtevorrichtung eingebracht wird.

5. Herstellungsverfahren nach einem oder mehreren der vorherigen Ansprüche, **dadurch gekennzeichnet, dass** die Werkzeugform der Aushärtevorrichtung vor dem Aufsprühen der thermo-/duroplastischen Funktionsschicht (3) vorgewärmt und/oder während des Härteprozesses auf einer, vorzugsweisen konstanten, Temperatur gehalten wird, die insbesondere höher oder gleich der Aushärtetemperatur der duroplastischen Matrix (5) und/oder des in der thermo-/duroplastische Funktionsschicht (3) verwendeten Duroplasten, vorzugsweise zwischen 100 °C und 200 °C, besonders bevorzugt 120 °C, und niedriger als die Schmelztemperatur des in der thermo-/duroplastische Funktionsschicht (3) verwendeten Thermoplasten, vorzugsweise zwischen 100 °C und 300 °C, besonders bevorzugt 200 °C, ist.

6. Duroplastbauteil (1) zum Verschweißen mit einem Thermoplastbauteil (9)
mit einem ausgehärteten duroplastischen Grundkörper (2),
der in einer duroplastischen Matrix (5) eingebundene Verstärkungsfasern (4) aufweist und
zumindest in einem zum Verbinden mit dem Thermoplastbauteil (9) vorgesehenen Fügebereich (7a) eine Funktionsschicht (3) aufweist, die eine thermo-/duroplastische Funktionsschicht (3) ist,
**dadurch gekennzeichnet,**
**dass** das Duroplastbauteil (1) mit einem Herstellungsverfahren gemäß einem oder mehreren der vorherigen Ansprüche hergestellt ist.

7. Duroplastbauteil nach dem vorherigen Anspruch, **dadurch gekennzeichnet, dass** die thermo-/duroplastische Funktionsschicht (3) eine Sprühschicht oder eine Folie ist und/oder
mit dem Grundkörper (2), insbesondere mit der duroplastischen Matrix (5) und/oder den Verstärkungsfasern (4), derart unmittelbar verbunden, insbesondere verklebt, ist, dass zwischen der thermo-/duroplastische Funktionsschicht (3) und dem Grundkörper (2) eine Adhäsions-Grenzfläche (6) ausgebildet ist.

8. Duroplastbauteil nach einem oder mehreren der vorherigen Ansprüche, **dadurch gekennzeichnet, dass** der Duroplast der thermo-/duroplastischen Funktionsschicht (3) mit dem der duroplastischen Matrix (5) gleich oder zumindest weitestgehend ähnlich ist.

9. Duroplastbauteil nach einem oder mehreren der vorherigen Ansprüche, **dadurch gekennzeichnet, dass** der Duroplastanteil der thermo-/duroplastischen Funktionsschicht (3) im Bereich der Adhäsions-Grenzfläche (6) größer ist als im Bereich ihrer zum Fügen mit dem Thermoplastbauteil (9) vorgesehenen Verbindungsfläche (8).

10. Duroplastbauteil nach einem oder mehreren der vorherigen Ansprüche, **dadurch gekennzeichnet, dass** der Thermoplastanteil der thermo-/duroplastischen Funktionsschicht (3) größer oder gleich dem Duroplastanteil ist.

11. Duroplastbauteil nach einem oder mehreren der vorherigen Ansprüche, **dadurch gekennzeichnet, dass** die thermo-/duroplastische Funktionsschicht (3), insbesondere über ihre gesamte Fläche, eine im Wesentlichen homogene Dicke von 10 µm - 1000 µm, insbesondere von 150 µm - 750 µm, aufweist.

12. Verbundbauteil (10)
mit einem ausgehärteten Duroplastbauteil (1), und
einem Thermoplastbauteil (9),
die mittels einer Funktionsschicht (3) des ausgehärteten Duroplastbauteils (1) miteinander verbunden sind,
wobei das Thermoplastbauteil (9) unmittelbar mit der Funktionsschicht (3) des ausgehärteten Duroplastbauteils (1) verschweißt ist,
so dass zwischen dem Thermoplastbauteil (9) und der Funktionsschicht (3) ein Diffusionsbereich (11) ausgebildet ist **dadurch gekennzeichnet,**
**dass** das Duroplastbauteil (1) gemäß einem oder mehreren der vorherigen Ansprüche ausgebildet und mit einem Herstellungsverfahren gemäß einem oder mehreren der vorherigen Ansprüche hergestellt ist.

13. Verbundbauteil nach dem vorherigen Anspruch, **dadurch gekennzeichnet, dass** der Thermoplast des Thermoplastbauteils (9) mit dem der thermo-/duroplastischen Funktionsschicht (3) gleich oder zumindest weitestgehend ähnlich ist.

## Claims

1. A method for manufacturing an at least hardened fiber-reinforced thermosetting plastic component (1) that can be joined to a thermoplastic component (9) via a firm bond,
in which before or during the hardening process on a still unhardened thermosetting plastic main body (2), which comprises reinforcement fibers (4) and a viscous thermosetting plastic matrix (5), a functional layer (3) is applied, at least in a joining area (7a) intended for joining to the thermoplastic component (9),
the at least partially coated main body (2) is hardened and/or cured in a curing device under pressure and/or heat,
wherein during this hardening process, the functional layer (3) is joined to the thermosetting plastic matrix (5) and/or the reinforcement fibers (4) of the main body (2) via a firm bond.
so that after the manufacturing method has been completed, the at least hardened main body (2) can be joined in a subsequent joining process to the thermoplastic component (9) intended for this purpose via the functional layer (3). **characterized in that** a thermo-/ thermosetting plastic functional layer (3) is applied.

2. Method according to the previous claim, **characterized in that** the thermo-/ thermosetting plastic functional layer (3), especially in liquid, paste, powder and/or granulate form, is applied on a tool shape of the curing device, at least in a tool shape area fitting tightly on the joining area (7a) during the hardening process and/or is transferred to the unhardened main body when the tool shape is closed.

3. Method according to one or several of the previous claims, **characterized in that** the thermo-/ thermosetting plastic functional layer (3) is joined to the thermosetting plastic matrix (5) and/or the reinforcement fibers (4) through adhesion during the hardening process, especially by sticking directly to it, so that an adhesion interface (6) is formed between these two,
wherein preferably during the hardening process the thermosetting plastic amounts of the thermoplastic/thermosetting plastic functional layer (3) move towards the adhesion interface (6) and the thermoplastic amounts away from it.

4. Method according to one or several of the previous claims, **characterized in that** the thermosetting plastic matrix (5) is sprayed on the reinforcement fibers (4) in a wet impregnation process, injected into the hardening device in an injection process or inserted as prepreg into the curing device together with the reinforcement fibers (4).

5. Method according to one or several of the previous claims, **characterized in that** during the hardening process, the tool shape of the curing device is preheated before the thermo-/ thermosetting plastic functional layer (3) is sprayed on and/or maintained at a preferably constant temperature,
that is especially higher or equal to the curing temperature of the thermosetting plastic matrix (5) and/or of the thermosetting plastics used in the thermo-/ thermosetting plastic functional layer (3), preferably between about 100 °C and about 200 °C, very preferably about 120 °C, and
lower than the melting temperature of the thermoplastic used in the thermo-/ thermosetting plastic functional layer (3), preferably between about 100 °C and about 300 °C, very preferably about 200 °C.

6. A thermosetting plastic component (1) for welding to a thermoplastic component (9)
with a thermosetting plastic main body (2),
that has reinforcement fibers (4) integrated into a thermosetting plastic matrix (5) and
has a functional layer (3) at least in a joining area (7a) intended for joining to the thermoplastic component (9),
that is a thermoplastic/thermosetting plastic functional layer (3), **characterized in that**
the thermosetting plastic component (1) is produced by a manufacturing process according to one or more of the previous claims.

7. Thermosetting plastic component (1) according to the previous claim, **characterized in that** the thermoplastic/thermosetting plastic functional layer (3) is a sprayed layer or a foil and/or
is joined directly, especially glued, to the main body(2), especially to the thermosetting plastic matrix (5) and/or the reinforcement fibers (4) in such a way that an adhesion interface (6) is formed between the thermoplastic/thermosetting plastic functional layer (3) and the main body (2).

8. Thermosetting plastic component (1) according to one or several of the previous claims, **characterized in that** the thermosetting plastic of the thermoplastic/thermosetting plastic functional layer (3) is identical or at least very similar to that one of the thermosetting plastic matrix (5).

9. Thermosetting plastic component (1) according to one or several of the previous claims, **characterized in that** the thermosetting plastic amount of the thermoplastic/thermosetting plastic functional layer (3) is greater in the area of the adhesion interface (6) than in the area of the connecting surface (8) intended for joining to the thermoplastic component (9).

10. Thermosetting plastic component (1) according to one or several of the previous claims, **characterized in that** the thermoplastic amount of the thermoplastic/thermosetting plastic functional layer (3) is greater than or equal to the thermosetting plastic amount.

11. Thermosetting plastic component according to one or several of the previous claims, **characterized in that** the thermoplastic/thermosetting plastic functional layer (3) has a largely homogenous thickness from about 10 µm to about 1000 µm, particularly from about 150 µm to about 750 µm, especially over its entire surface.

12. A composite part (10)
with a cured thermosetting plastic component (1), and
a thermoplastic component (9),
that are joined together via a functional layer (3) of the cured thermosetting plastic component (1),
wherein the thermoplastic component (9) is welded directly to the functional layer (3) of the cured thermosetting plastic component (1) so that a diffusion area (11) is formed between the thermoplastic component (9) and the functional layer (3). **characterized in that** the thermosetting plastic component (1) is formed in accordance with one or more of the previous claims and is manufactured using a manufacturing process in accordance with one or more of the previous claims.

13. Composite part according to the previous claim, **characterized in that** the thermoplastic of the thermoplastic component (9) is equal or at least very similar to that one of the thermoplastic or thermoplastic/thermosetting plastic functional layer (3).

## Revendications

1. Procédé de fabrication d'un composant thermodurcissable (1) au moins partiellement durci renforcé par des fibres, qui peut être relié par conjugaison de matières à un composant thermoplastique (9),
dans lequel, avant ou pendant un processus de durcissement, une couche fonctionnelle (3) est appliquée sur un corps de base thermodurcissable (2) encore non durci qui comprend des fibres de renforcement (4) et une matrice thermodurcissable visqueuse (5), au moins dans une zone de jointure (7a) prévue pour la jointure avec le composant thermoplastique (9), dans lequel le corps de base (2) au moins partiellement revêtu est partiellement durci et/ou durci sous pression et/ou à chaud dans un dispositif de durcissement,
dans lequel la couche fonctionnelle (3) se lie pendant ce processus de durcissement par conjugaison de matières à la matrice thermodurcissable (5) et/ou aux fibres de renforcement (4) du corps de base (2),
de sorte que le corps de base (2) au moins partiellement durci, après la fin du procédé de fabrication, peut être relié au composant thermoplastique (9) prévu à cet effet au moyen de la couche fonctionnelle (3), dans le cadre d'un processus de jointure ultérieur,
**caractérisé en ce qu'**
une couche fonctionnelle (3) thermodurcissable/thermoplastique est appliquée.

2. Procédé de fabrication selon la revendication précédente, **caractérisé en ce que** la couche fonctionnelle (3) thermodurcissable/thermoplastique est appliquée, en particulier sous forme de liquide, de pâte, de poudre et/ou de granulés, sur un moule à outils du dispositif de durcissement, au moins dans une zone du moule à outils s'appliquant sur la zone de jointure (7a) pendant le processus de durcissement, et/ou est transférée sur le corps de base non durci à la fermeture du moule à outils.

3. Procédé de fabrication selon l'une quelconque ou plusieurs des revendications précédentes, **caractérisé en ce que** la couche fonctionnelle (3) thermodurcissable/thermoplastique se lie par adhésion à la matrice thermodurcissable (5) et/ou aux fibres de renforcement (4) pendant le processus de durcissement, en particulier y colle directement, de sorte qu'il se forme entre les deux une interface d'adhésion (6),
dans lequel, de préférence, les parts thermodurcissables de la couche fonctionnelle (3) thermodurcissable/thermoplastique migrent pendant le processus de durcissement dans la direction de l'interface d'adhésion (6) et les parts thermoplastiques s'en éloignent.

4. Procédé de fabrication selon l'une quelconque ou plusieurs des revendications précédentes, **caractérisé en ce que** la matrice thermodurcissable (5) est pulvérisée sur les fibres de renforcement (4) dans un procédé d'imprégnation par voie humide, injectée dans le dispositif de durcissement dans un procédé d'injection ou introduite dans le dispositif de durcissement avec les fibres de renforcement (4) en tant que pré-imprégné.

5. Procédé de fabrication selon l'une quelconque ou plusieurs des revendications précédentes, **caractérisé en ce que** le moule à outils du dispositif de durcissement est préchauffé et/ou maintenu à une température, de préférence constante, pendant le processus de durcissement avant la pulvérisation de la couche fonctionnelle (3) thermodurcissable/thermoplastique, qui est en particulier supérieure ou égale à la température de durcissement de la matrice thermodurcissable (5) et/ou du thermodurcissable utilisé dans la couche fonctionnelle (3) thermodurcissable/thermoplastique, de préférence entre 100 °C et 200 °C, de manière particulièrement préférée de 120 °C, et inférieure à la température de fusion du thermoplastique utilisé dans la couche fonctionnelle (3) thermodurcissable/thermoplastique, de préférence entre 100 °C et 300 °C, de manière particulièrement préférée de 200 °C.

6. Composant thermodurcissable (1) destiné à être soudé avec un composant thermoplastique (9),
avec un corps de base (2) thermodurcissable durci,
qui présente des fibres de renforcement (4) incorporées dans une matrice thermodurcissable (5) et
présente une couche fonctionnelle (3) au moins dans une zone de jointure (7a) prévue pour la jointure avec le composant thermoplastique (9), qui est une couche fonctionnelle (3) thermodurcissable/thermoplastique,
**caractérisé en ce que**
le composant thermodurcissable (1) est fabriqué par un procédé de fabrication selon l'une quelconque ou plusieurs des revendications précédentes.

7. Composant thermodurcissable selon la revendication précédente, **caractérisé en ce que** la couche fonctionnelle (3) thermodurcissable/thermoplastique est une couche obtenue par pulvérisation ou un film et/ou est directement reliée, en particulier collée, au corps de base (2), en particulier à la matrice thermodurcissable (5) et/ou aux fibres de renforcement (4), de sorte qu'il se forme une interface d'adhésion (6) entre la couche fonctionnelle (3) thermodurcissable/thermoplastique et le corps de base (2).

8. Composant thermodurcissable selon l'une quelconque ou plusieurs des revendications précédentes, **caractérisé en ce que** le thermodurcissable de la couche fonctionnelle (3) thermodurcissable/thermoplastique est identique ou au moins largement similaire à celui de la matrice thermodurcissable (5).

9. Composant thermodurcissable selon l'une quelconque ou plusieurs des revendications précédentes, **caractérisé en ce que** la part de thermodurcissable de la couche fonctionnelle (3) thermodurcissable/thermoplastique est plus élevée dans la zone de l'interface d'adhésion (6) que dans la zone de sa surface de jointure (8) prévue pour la jointure avec le composant thermoplastique (9).

10. Composant thermodurcissable selon l'une quelconque ou plusieurs des revendications précédentes, **caractérisé en ce que** la part de thermoplastique de la couche fonctionnelle (3) thermodurcissable/thermoplastique est supérieure ou égale à la part de thermodurcissable.

11. Composant thermodurcissable selon l'une quelconque ou plusieurs des revendications précédentes, **caractérisé en ce que** la couche fonctionnelle (3) thermodurcissable/thermoplastique, en particulier sur toute sa surface, présente une épaisseur sensiblement homogène de 10 µm - 1 000 µm, en particulier de 150 µm - 750 µm.

12. Composant composite (10),
avec un composant thermodurcissable (1) durci et
un composant thermoplastique (9),
qui sont joints l'un à l'autre au moyen d'une couche fonctionnelle (3) du composant thermodurcissable (1) durci,
dans lequel le composant thermoplastique (9) est directement soudé avec la couche fonctionnelle (3) du composant thermodurcissable (1) durci,
de sorte qu'une zone de diffusion (11) est formée entre le composant thermoplastique (9) et la couche fonctionnelle (3),
**caractérisé en ce que**
le composant thermodurcissable (1) est conçu selon l'une quelconque ou plusieurs des revendications précédentes et est fabriqué par un procédé de fabrication selon l'une quelconque ou plusieurs des revendications précédentes.

13. Composant composite selon la revendication précédente, **caractérisé en ce que** le thermoplastique du composant thermoplastique (9) est identique ou au moins largement similaire à celui de la couche fonctionnelle (3) thermodurcissable/thermoplastique.
